# EUROPEAN PATENT SPECIFICATION

(11) **EP 2 674 646 B1**
(45) Date of publication and mention of the grant of the patent: **29.07.2015**
(21) Application number: 13171280.4
(22) Date of filing: 10.06.2013
(51) Int. Cl.: F16J 15/34

(54) **Mechanical seal and sealing system comprising said mechanical seal**
Mechanische Dichtung und Dichtungssystem mit dieser Abdichtung
Joint mécanique et système d'étanchéité comprenant ledit joint mécanique

(30) Priority: 11.06.2012 IT VI20120138
(43) Date of publication of application: 18.12.2013
(73) Proprietor: CALPEDA S.p.A., I-36050 Montorso Vicentino (VI) (IT)
(72) Inventor: Matteazzi, Giuliano, 36040 BRENDOLA (VI) (IT); Zamberlan, Fiorenzo, 36070 TRISSINO (VI) (IT)
(74) Representative: Bonini, Ercole

(56) References cited:
- DE-U1- 29 714 224
- US-A- 3 312 476
- US-A1- 2009 096 175
- US-A1- 2011 298 182

## Description

The present invention concerns a mechanical seal for a fluid, particularly suited to be used in a rotodynamic pump, as well as a sealing system comprising said mechanical seal.

As is known, rotodynamic pumps and, more generally, fluid-operated machines, comprise a tight chamber containing a fluid that exchanges energy with one or more impellers arranged in the chamber itself.

The impellers are set rotating by means of a shaft connected to a motor arranged on the outside of the tight chamber, which therefore is provided with a hole for the passage of the shaft.

In order to prevent the fluid from flowing out of the tight chamber through the hole, a mechanical seal is generally used, which is interposed between the shaft and the hole itself.

A mechanical seal, such as the one disclosed in document DE 297 14 224 U1, usually comprises two sealing rings, respectively associated with the hole and with the shaft through corresponding gaskets.

In particular, a sealing ring is fixed with respect to the hole, while the other sealing ring is associated with the shaft in such a way as to rotate together with the latter.

Furthermore, elastic means are provided, which thrust the two rings against each other with a pre-defined pressure, in such a way as to arrange them in mutual contact at the level of corresponding sealing surfaces.

The contact between the sealing surfaces prevents the fluid from passing through the two rings.

For the sake of simplicity, here below this type of mechanical seal will be referred to as "traditional".

A mechanical seal of the type just described above poses the drawback that it requires a considerable time for assembly on the machine, deriving from the need to assemble its components on the shaft and on the hole one by one.

Furthermore, said assembly procedure poses the further drawback of requiring the intervention of specialized personnel, capable of positioning the components of the mechanical seal correctly, with particular reference to the elastic means, which must be pre-loaded so as to exert a thrusting action having a correct value on the sealing rings.

The drawbacks mentioned above are at least partially overcome by a mechanical seal of the so-called "cartridge" type, whose components are preassembled on a supporting body in pre-defined mutual positions, so that they can be installed by means of a single operation.

A cartridge seal of the known type comprises a supporting body provided with a through cavity, with one end of which the fixed sealing ring is fixedly associated.

The rotary ring is arranged so that it faces the fixed sealing ring and is revolvingly associated with it through a tubular body, arranged so that it passes through both of the rings and made integral with the rotary ring during rotation, so that it rotates together with the latter with respect to the fixed ring.

Elastic means are interposed between the rotary ring and the corresponding end of the tubular body, while the opposing end of the tubular body extends beyond the fixed ring and has a projecting flange facing the supporting body.

The tubular body is configured so that the elastic means are compressed and thrust the flange of the tubular body so that it rests against the supporting body.

The assembly of said cartridge seal on the fluid-operated machine is carried out by fixing the supporting body to the hole of the fluid-operated machine and by inserting the shaft into the tubular body, which is fixed to the shaft itself through suitable connection elements suited to make the two components integral with each other.

Between the supporting body and the flange of the tubular body there is a spacer element that, prior to the assembly of the seal, maintains a sufficient space between the two elements.

Said spacer element is configured so that it wears out during the operation of the seal, in such a way as to physically separate the tubular body from the supporting body and eliminate any friction between the two components.

According to a variant embodiment of the invention, the spacer element is removed manually after the assembly of the seal.

In any case, said cartridge seal poses the drawback that it requires the use of specific sealing rings and elastic means, different from those normally used in the traditional mechanical seals described above.

In fact, with reference to a shaft having a pre-defined diameter, the sealing rings and the elastic means of a traditional seal are sized so that they can be directly coupled with the shaft, and therefore have holes with diameters that are very close to the diameter of the latter.

On the contrary, in a cartridge seal the sealing rings and the elastic means are provided with holes with larger diameter than those present in the previous solutions, as they have to be externally coupled with the tubular body, whose outer diameter is considerably larger than the diameter of the shaft.

The specific features of the components of the above mentioned cartridge seal means that their cost is higher than that of the components of the corresponding traditional seal, with the drawback of increasing the overall cost of the cartridge seal.

A further drawback posed by the above mentioned cartridge seal lies in the need to provide connection elements suited to make the tubular body and the shaft mutually integral with each other, wherein said connection elements contribute to increasing the cost of the seal.

Furthermore, the cartridge seal described above poses the drawback that, once the spacer elements have been removed after the assembly or have worn out following a period of operation, the disassembly of the seal, if necessary, changes the relative position of the tubular body and the supporting body.

Therefore, there is the drawback that any re-use of the seal requires that the original position of the tubular body with respect to the supporting body be restored, with evident practical problems.

The present invention intends to overcome the drawbacks mentioned above concerning the cartridge seals of the known type.

In particular, it is the object of the present invention to provide a cartridge seal having a lower cost than the cartridge seals of the known type.

It is also the object of the present invention to provide a seal that is easier to install on the machine for which it is destined compared to a cartridge seal of the known type, both on the first assembly and on any second successive assembly.

The said objects are achieved by a mechanical seal constructed according to claim 1.

Said mechanical seal is also particularly suited to be used in a sealing system in accordance with claim 13.

Further detail characteristics of the invention are provided in the corresponding dependent claims.

Said object will be highlighted in the descriptions of some preferred embodiments of the invention that are provided by way of non-limiting examples with reference to the attached drawings, wherein:
- Figure 1 shows a side sectional view of the mechanical seal of the invention;
- Figure 2 shows the sealing system comprising the mechanical seal shown in Figure 1;
- Figures 3 and 4 show two different variant embodiments of the mechanical seal of the invention.

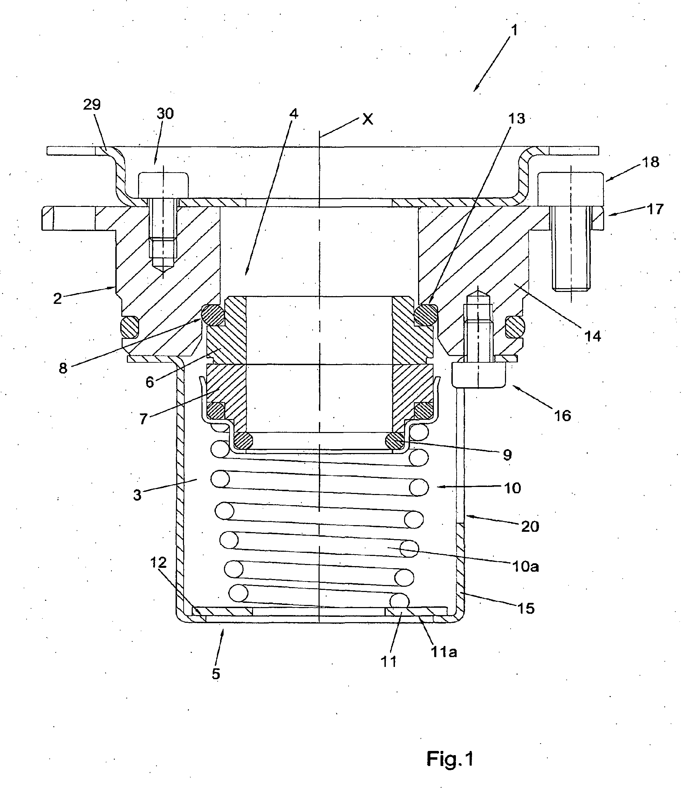

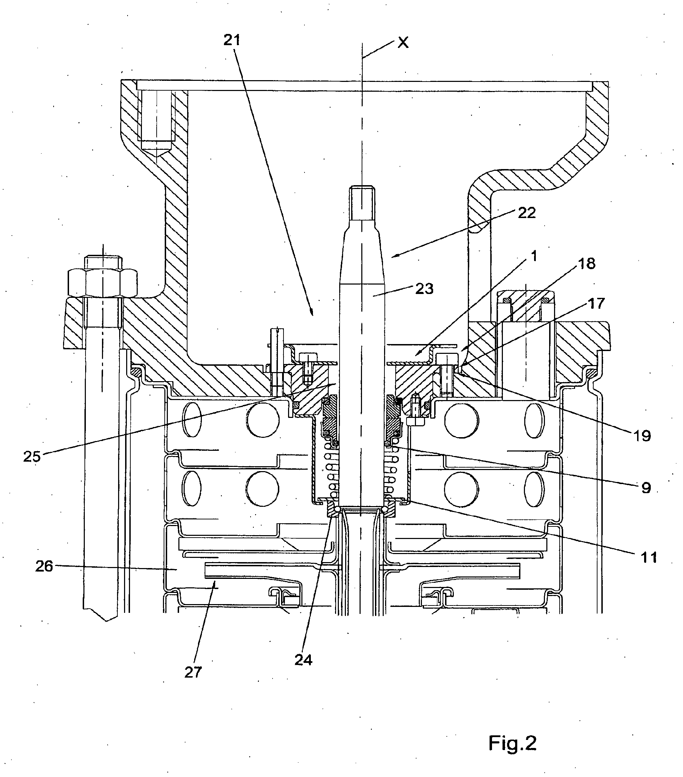

The mechanical seal of the invention, indicated as a whole by **1** in Figure 1, is particularly suited to be used in a sealing system **21** of the type shown in Figure 2, in which the mechanical seal **1** is interposed between a hole **25** and a shaft **22** revolvingly inserted in said hole **25** in order to prevent the passage of a fluid.

For example, said hole **25** can belong to the tight chamber **26** of a pump or of any fluid-operated rotodynamic pump, in which there are one or more impellers **27** suited to exchange energy with the fluid contained therein.

In this case, the shaft **22** is connected to a motor, not illustrated herein but known per se, which sets said impellers rotating.

It is also evident that the mechanical seal **1** can be used for any application in which a mechanical seal of the known type is normally used.

The mechanical seal **1** comprises a supporting body **2** that delimits a through cavity **3** that extends according to a longitudinal direction **X** between two opposing openings **4** and **5.**

As shown in Figure 2, the supporting body **2** is associated with the hole **25** through connection means that preferably but not necessarily comprise a coupling flange **17** belonging to the supporting body **2** and projecting towards the outside in a direction incident on said longitudinal direction **X.**

Screw means **18** are preferably provided for connecting the coupling flange **17** with a corresponding seat **19** that delimits the hole **25.**

The cavity **3** of the supporting body **2** houses a first sealing ring **6** associated with a first one of said openings **4** through the interposition of a sealing element **8,** preferably a gasket, suited to prevent the passage of the fluid between the two components and to house a shaft **22** revolvingly arranged through the hole **25.**

In the cavity **3** there is also a second sealing ring **7,** facing the first sealing ring **6** and revolving with respect to the supporting body **2,** suited to be associated with said shaft **22.**

Furthermore, in the cavity **3** there are elastic means **10** suited to thrust the two sealing rings **6** and **7** against each other according to said longitudinal direction **X,** in such a way as to arrange them in mutual contact at the level of corresponding sliding faces.

In particular, the sliding faces are configured so that when they are arranged in mutual contact the fluid cannot pass through them.

Inside the cavity **3** there is also a stop ring **11,** interposed between the second sealing ring **7** and a supporting surface **12** belonging to the surface that delimits the cavity **3** and delimiting the perimeter of the second opening **5** opposing said first opening **4.**

The stop ring **11** is configured so that, due to the effect of the thrusting action of the elastic means **10,** it can assume a stop position against said supporting surface **12,** as shown in Figure 1.

At the same time, the stop ring **11** is not fixed to the supporting body **2** and can therefore be lifted from the supporting surface **12** due to the effect of an external thrusting action opposing that exerted by the elastic means **10.**

Obviously, the stop ring **11** maintains the two sealing rings **6** and **7** and the elastic means **10** compressed against each other inside the cavity **3** until the seal **1** is installed on the machine.

Consequently, the stop ring **11** plays a role that is analogous to that of the projecting flange of the tubular body in the cartridge seals of the known type described above, making the tubular body actually superfluous.

The absence of a tubular body makes it possible to use, in the mechanical seal **1,** the same sealing rings and the same elastic means used in the mechanical seals of the traditional type, avoiding the use of special components and thus reaching the object of limiting the cost of the seal itself.

The second sealing ring **7** is associated with the shaft **22** preferably through the interposition of an annular gasket **9** that projects towards the inside of the second sealing ring **7** so that it comes to be in contact with the shaft **22** thus preventing the passage of fluid between the two elements.

It is evident, on the other hand, that the function of the annular gasket **9** can be performed by a different sealing element, provided that it is suited to prevent the passage of fluid between the second sealing ring **7** and the shaft **22.**

As regards the stop ring **11,** this is configured so that, in said stop position, it has at least one portion **11a** whose projection according to the longitudinal direction **X** is contained within the second opening **5.**

Said portion **11a** makes it possible to thrust the stop ring **11** from the outside in the direction opposing the action of the elastic means **10,** meaning towards the first opening **4,** in such a way as to separate it from the supporting surface **12.**

In particular, said thrusting action is exerted by the shaft **22** during its insertion in the mechanical seal **1.**

More precisely, and as shown in Figure 2, the shaft **22** comprises a first section **23** suited to be inserted in the first opening **4,** in the second opening **5** and through the sealing rings **6** and **7.**

The shaft **22** also comprises a second section **24** whose diameter exceeds that of said first section **23,** configured so that it can be inserted in the second opening **5** and be arranged against the stop ring **11,** in such a way as to thrust it as described above and lift it from the supporting surface **12.**

In said lifted position, the stop ring **11** is in contact with the shaft **22** and rotates integrally with it and with the second sealing ring **7,** however without scratching the supporting surface **12.**

Consequently, to advantage, the stop ring **11** is not subjected to any wear during rotation.

Furthermore, as the stop ring **11** is lifted from the supporting surface **12** following the insertion of the shaft **22,** it is not necessary to interpose any spacer element between the two components in order to keep them at a prefixed mutual distance, meaning a further advantage in terms of cost of the seal. The absence of spacer elements makes it possible to achieve also the object to allow the mechanical seal **1** to be removed from the machine and to be successively installed again with no need to restore the relative position between the stop ring **11** and the supporting surface **12,** given that this position is determined automatically upon insertion of the shaft **22.**

The elastic means **10** are preferably interposed between the second sealing ring **7** and the stop ring **11.**

In this case, the first sealing ring **6** rests on an annular surface **13** that perimetrically delimits the first opening **4,** preferably through the interposition of a sealing element **8,** for example an annular gasket, which prevents the passage of fluid between the first sealing ring **6** and the annular surface **13.**

Preferably, the elastic means **10** comprise a conical helical spring **10a,** one end of which has a diameter that is shorter than the diameter of the shaft **22,** so that it can be coupled with the latter through interference.

Advantageously, said conical spring **10a** renders the second sealing ring **7** rotationally integral with the shaft **22.**

On the other hand, in variant embodiments of the invention that are described here below, said driving movement can take place through any element interposed between the shaft **22** and the second sealing ring **7,** for example the same annular gasket **9** mentioned above.

In both cases, it can be understood that the second sealing ring **7** is driven in the rotary motion by the shaft **22** using the same means used in traditional seals, thus avoiding the need to use further connection elements like those use in the cartridge seals of the known type described above, meaning a further advantage in terms of overall cost of the seal.

Preferably but not necessarily, the stop ring **11** is fixedly associated with the elastic means **10,** for example by welding or analogous means.

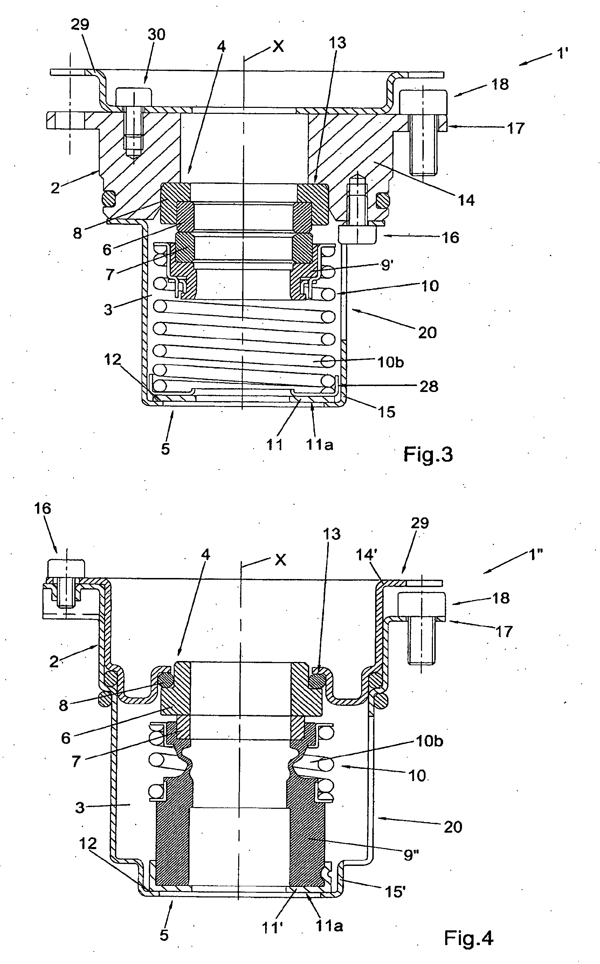

According to the variant embodiment described in Figure 3, the mechanical seal **1'** includes a shaped washer **28** interposed between the stop ring **11** and the elastic means **10,** which defines a seat suited to house one end of the elastic means **10.**

Preferably but not necessarily, said seat is configured so that it can be coupled with the elastic means **10** through interference.

According to a variant embodiment not illustrated herein, the seat is created directly in the stop ring **11,** in such a way as to simplify the mechanical seal.

This variant **1'** differs from the previous one due to the fact that the annular gasket **9'** between the second sealing ring **7** and the shaft **22** is configured in such a way as to guarantee the connection between the two elements during rotation.

As the function of driving the second sealing ring **7** in rotation is performed by the annular gasket **9'** instead of by the spring **10b,** it can be understood that the latter may come in any shape, for example cylindrical.

According to a further variant embodiment, shown in Figure 4 and therein indicated as a whole by **1",** the gasket **9"** interposed between the second sealing ring **7** and the shaft **12** is a shaped body that extends between the second sealing ring **7** and the stop ring **11** in such a way as to connect them together.

In this case, the stop ring **11** is preferably associated with said shaped gasket **9"** through means that are analogous to those described for the two previous variants, for example through a seat defined by the stop ring **11** and configured so as to accommodate the shaped gasket **9"** through interference.

It is evident, however, that the connection between the shaped gasket **9"** and the stop ring **11** can be carried out in a different manner, for example using a bonding agent.

According to this variant, too, the shaped gasket **9"** is configured so as to connect the second sealing ring **7** and the shaft **22** during rotation, analogously to the previous variant.

Preferably, the mechanical seals **1, 1', 1"** comprise also a cover **29,** associated with the supporting body **2** on the side facing towards the first sealing ring **6,** which is provided with a raised edge suited to make it easier for an operator to hold the seal, and thus facilitate the assembly and disassembly operations.

Said cover **29** is preferably but not necessarily associated with the supporting body **2** through screw means **30,** as shown in Figures 1 and 3.

According to the construction variant shown in Figure 4, the cover **29** forms a single body with the supporting body **2,** so that it is no more necessary to use the screw means to connect the two elements with each other, and thus making the seal easier to construct.

The supporting body **2,** as shown in Figures 1 and 3, is preferably constituted by a first portion **14** comprising the first opening **4** and by a second portion **15** comprising the second opening **5.**

Said two portions **14, 15** are connected to each other through removable joining means **16** like, for example, screw means.

Advantageously, said configuration of the supporting body **2** facilitates the assembly and disassembly of the mechanical seal **1.**

An analogous configuration can be observed also in the variant embodiment of Figure 4, which differs from the previous ones substantially in that the two portions **14'** and **15'** are both obtained from drawn sheet.

In all the variant embodiments, the supporting body **2** preferably comprises also one or more third openings **20,** arranged in an intermediate position between the first opening **4** and the second opening **5** so as to allow the passage of the fluid.

Advantageously, said third openings **20** favour the lubrication of the mechanical seal **1** in operating conditions.

A further variant embodiment of the invention, not illustrated herein, differs from the previous ones due to the fact that the elastic means **10** are interposed between the first sealing ring **6** and the annular surface **13.**

In this case, the stop ring **11** is rigidly associated with the second sealing ring **7** so that the lifting of the first one during insertion of the shaft **22** causes the simultaneous lifting of the second one.

Obviously, in this variant embodiment the stop ring **11** may also constitute a single body with the sealing ring **7.**

According to the above, it can be understood that the mechanical seal described above achieves all the objects of the invention.

In particular, the presence of the stop ring avoids the need to use a tubular body interposed between the sealing rings and the shaft and, therefore, makes it possible to use the same sealing rings used in a traditional seal suited to a shaft having the same diameter, so as to limit the overall cost of the seal itself.

Furthermore, the absence of the tubular body makes it possible to directly connect the rotary ring to the shaft using the same elements already used in the traditional seals, to further advantage in terms of seal cost.

Furthermore, the fact that the stop ring is arranged so that it projects towards the inside of the second opening makes it possible to separate it from the supporting body during coupling of the shaft with the seal.

This makes it possible to avoid using removable spacer elements between the stop ring and the supporting body, and consequently allows the mechanical seal to be used again even after removal, with no need to restore said spacer elements.

Further construction variants of the invention, even though not described herein and not illustrated in the drawings, must all be considered protected by the present patent, provided that they fall within the scope of the following claims.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Mechanical seal (1; 1'; 1") for a fluid, comprising a supporting body (2) that delimits a through cavity (3) extending between two opposing openings (4, 5) that delimit said through cavity (3) according to a longitudinal direction (X), the following being arranged in said through cavity (3):
- a first sealing ring (6) associated with a first one of said openings (4) through the interposition of a sealing element (8) suited to prevent the passage of said fluid;
- a second sealing ring (7) facing said first sealing ring (6) and revolvingly associated with said supporting body (2);
- elastic means (10) compressed between said supporting body (2) and one of said sealing rings (6, 7) in such a way as to thrust said sealing rings (6, 7) against each other according to said longitudinal direction (X) so as to arrange them in mutual contact,
**characterized in that it comprises** a stop ring (11; 11') interposed between said second sealing ring (7) and a supporting surface (12) belonging to the surface that delimits said through cavity (3), the supporting surface (12) delimiting the perimeter of the second one of said openings (5), said stop ring (11; 11') being configured in such a way that it can be thrust by said elastic means (10) in a stop position against said supporting surface (12),
said stop ring (11; 11') being furthermore configured so that, in said stop position, it has at least one portion (11a) whose projection according to said longitudinal direction (X) is contained within said second opening (5).

2. Mechanical seal (1; 1'; 1") according to claim 1), **characterized in that** said elastic means (10) are interposed between said second sealing ring (7) and said stop ring (11; 11').

3. Mechanical seal (1; 1'; 1") according to claim 2), **characterized in that** said first sealing ring (6) is associated with an annular surface (13) that perimetrically delimits said first opening (4).

4. Mechanical seal (1; 1'; 1") according to any of the preceding claims, **characterized in that** said elastic means (10) comprise a helical spring (10a; 10b).

5. Mechanical seal (1) according to claim 4), **characterized in that** said helical spring (10a) is conical.

6. Mechanical seal (1; 1'; 1") according to any of the preceding claims, **characterized in that** said second sealing ring (7) comprises an annular gasket (9; 9'; 9") projecting towards the inside of said second sealing ring (7).

7. Mechanical seal (1; 1'; 1") according to any of the preceding claims, **characterized in that** said first opening (4) belongs to a first portion (14; 14') of said supporting body (2) and said second opening (5) belongs to a second portion (15; 15') of said supporting body (2), said two portions (14, 15; 14', 15') being connected to each other through removable joining means (16).

8. Mechanical seal (1; 1'; 1") according to any of the preceding claims, **characterized in that** said supporting body (2) comprises a coupling flange (17) projecting towards the outside in a direction incident on said longitudinal direction (X).

9. Mechanical seal (1; 1'; 1") according to claim 8), **characterized in that** it comprises screw means (18) suited to connect said coupling flange (17) to a corresponding seat (19).

10. Mechanical seal (1; 1'; 1") according to any of the preceding claims, **characterized in that** said supporting body (2) comprises one or more third openings (20) arranged in intermediate positions between said first opening (4) and said second opening (5), suited to allow the passage of said fluid.

11. Mechanical seal (1; 1'; 1") according to any of the preceding claims, **characterized in that** said second sealing ring (7) is interposed between said first sealing ring (6) and the second one of said openings (5).

12. Mechanical seal (1; 1'; 1") according to any of the preceding claims, **characterized in that** said supporting body (2) is provided with connection means suited to associate it with a hole (25).

13. Sealing system (21) for a fluid, comprising a mechanical seal (1; 1'; 1") according to any of the preceding claims, **characterized in that** it comprises a shaft (22) provided with:
- a first section (23) suited to be inserted through said first opening (4), said second opening (5) and said sealing rings (6, 7);
- a second section (24) whose diameter is larger than the diameter of said first section (23), suited to be inserted in said second opening (5) and configured so that it can be arranged against said stop ring (11; 11') so as to thrust it in a direction opposing the action of said elastic means (10).

14. Sealing system (21) according to claim 13), **characterized in that** said mechanical seal (1; 1'; 1") is made according to claim 6), said annular gasket (9; 9'; 9") being configured so that it comes into contact with said first section (23) of said shaft (22).

## Patentansprüche

1. Mechanische Dichtung (1; 1'; 1") für eine Flüssigkeit, einen Stützkörper (2) umfassend, der einen durchgehenden Hohlraum (3) begrenzt, welcher sich zwischen zwei gegenüberliegenden Öffnungen (4, 5) erstreckt, die den besagten, durchgehenden Hohlraum (3) entsprechend einer Längsrichtung (X) begrenzen, wobei in dem besagten Hohlraum (3) Folgendes angeordnet ist:
- ein erster Dichtring (6), der mit einer ersten der besagten Öffnungen (4) verbunden ist durch Zwischenfügen eines Dichtelements (8), das dazu geeignet ist, den Durchfluss der besagten Flüssigkeit zu verhindern;
- ein zweiter Dichtring (7), der zum besagten ersten Dichtring (6) gerichtet ist und drehend mit dem besagten Stützkörper (2) verbunden ist;
- elastische Mittel (10), die zwischen dem besagten Stützkörper (2) und einem der besagten Dichtringe (6, 7) komprimiert sind, so dass sie die besagten Dichtringe (6, 7) gemäß der besagten Längsrichtung (X) gegeneinander drücken, um sie in wechselseitigem Kontakt zu positionieren,
**dadurch gekennzeichnet, dass** sie einen Anschlagring (11; 11') umfasst, der zwischen dem besagten, zweiten Dichtring (7) und einer zu der Oberfläche, die den besagten, durchgehenden Hohlraum (3) begrenzt, gehörenden Stützfläche (12) eingefügt ist, wobei die Stützfläche (12) den Umfang der zweiten der besagten Öffnungen (5) begrenzt, und wobei der besagte Anschlagring (11; 11') so konfiguriert ist, dass er durch die elastischen Mittel (10) in eine Anschlagposition gegen die besagte Stützfläche (12) gedrückt werden kann,
und der besagte Anschlagring (11; 11') des Weiteren so konfiguriert ist, dass er in der besagten Anschlagposition wenigstens einen Abschnitt (11a) aufweist, dessen Vorsprung entsprechend der besagten Längsrichtung (X) innerhalb der besagten, zweiten Öffnung (5) verbleibt.

2. Mechanische Dichtung (1; 1'; 1") gemäß Patentanspruch 1), **dadurch gekennzeichnet, dass** die besagten elastischen Mittel (10) zwischen dem besagten, zweiten Dichtring (7) und dem besagten Anschlagring (11; 11') eingefügt sind.

3. Mechanische Dichtung (1; 1'; 1") gemäß Patentanspruch 2), **dadurch gekennzeichnet, dass** der besagte, erste Dichtring (6) mit einer ringförmigen Oberfläche (13) verbunden ist, die den Umfang der besagten, ersten Öffnung (4) begrenzt.

4. Mechanische Dichtung (1; 1'; 1") gemäß eines jeden der vorstehenden Patentansprüche, **dadurch gekennzeichnet, dass** die besagten, elastischen Mittel (10) eine Schraubenfeder (10a; 10b) umfassen.

5. Mechanische Dichtung (1) gemäß Patentanspruch (4), **dadurch gekennzeichnet, dass** die besagte Schraubenbeder (10a) konisch geformt ist.

6. Mechanische Dichtung (1; 1'; 1") gemäß eines jeden der vorstehenden Patentansprüche, **dadurch gekennzeichnet, dass** der besagte, zweite Dichtring (7) eine ringförmige Dichtung (9; 9'; 9") umfasst, die in das Innere des besagten, zweiten Dichtrings (7) ragt.

7. Mechanische Dichtung (1; 1'; 1") gemäß eines jeden der vorstehenden Patentansprüche, **dadurch gekennzeichnet, dass** die besagte, erste Öffnung (4) zu einem ersten Abschnitt (14; 14') des besagten Stützkörpers (2) gehört und die besagte, zweite Öffnung (5) zu einem zweiten Abschnitt (15; 15') des besagten Stützkörpers (2) gehört, wobei die besagten zwei Abschnitte (14, 15; 14', 15') durch entfernbare Verbindungsmittel (16) miteinander verbunden sind.

8. Mechanische Dichtung (1; 1'; 1") gemäß eines jeden der vorstehenden Patentansprüche, **dadurch gekennzeichnet, dass** der besagte Stützkörper (2) einen Kupplungsflansch (17) umfasst, der nach außen in eine Richtung ragt, die auf die besagte Längsrichtung (X) einfällt.

9. Mechanische Dichtung (1; 1'; 1") gemäß Patentanspruch (8), **dadurch gekennzeichnet, dass** sie Schraubenmittel (18) umfasst, die geeignet sind, den besagten Kupplungsflansch (17) mit einer entsprechenden Aufnahme (19) zu verbinden.

10. Mechanische Dichtung (1; 1'; 1") gemäß eines jeden der vorstehenden Patentansprüche, **dadurch gekennzeichnet, dass** der besagte Stützkörpers (2) eine oder mehrere, dritte Öffnungen (20) umfasst, die in Zwischenpositionen zwischen der besagten ersten Öffnung (4) und der besagten zweiten Öffnung (5) angeordnet ist/sind, und dazu geeignet ist/sind, den Durchfluss der besagten Flüssigkeit zu erlauben.

11. Mechanische Dichtung (1; 1'; 1") gemäß eines jeden der vorstehenden Patentansprüche, **dadurch gekennzeichnet, dass** der besagte zweite Dichtring (7) zwischen dem besagten ersten Dichtring (6) und der zweiten der besagten Öffnungen (5) eingefügt ist.

12. Mechanische Dichtung (1; 1'; 1") gemäß eines jeden der vorstehenden Patentansprüche, **dadurch gekennzeichnet, dass** der besagte Stützkörper (2) mit Verbindungsmitteln versehen ist, die geeignet sind, ihn mit einem Loch (25) zu verbinden.

13. Dichtsystem (21) für eine Flüssigkeit, eine mechanische Dichtung (1; 1'; 1") gemäß eines jeden der vorstehenden Patentansprüche aufweisend, **dadurch gekennzeichnet, dass** es eine Welle (22) umfasst, die mit Folgendem versehen ist:
- einem ersten Abschnitt (23), dazu geeignet, durch die besagte, erste Öffnung (4), die besagte zweite Öffnung (5) und die besagten Dichtringe (6, 7) eingesetzt zu werden;
- einem zweiten Abschnitt (24), dessen Durchmesser größer ist als der Durchmesser des besagten, ersten Abschnitts (23), dazu geeignet, in die besagte, zweite Öffnung (5) eingesetzt zu werden, und so konfiguriert, dass er gegen den besagten Anschlagring (11; 11') positioniert werden kann, um ihn in eine der Wirkung der besagten elastischen Mittel (10) entgegengesetzte Richtung zu drücken.

14. Dichtsystem (21) gemäß Patentanspruch 13), **dadurch gekennzeichnet, dass** die besagte mechanische Dichtung (1; 1', 1") gemäß Patentanspruch 6) ausgeführt ist, wobei die besagte, ringförmige Dichtung (9; 9'; 9") so konfiguriert ist, dass sie mit dem besagten, ersten Abschnitt (23) der besagten Welle (22) in Kontakt kommt.

## Revendications

1. Joint mécanique (1; 1'; 1") pour un fluide, comprenant un corps de support (2) délimitant une cavité passante (3) s'étendant entre deux ouvertures (4, 5) opposées qui délimitent ladite cavité passante (3) selon une direction longitudinale (X), ce qui suit étant disposé dans ladite cavité passante (3):
- une première bague d'étanchéité (6) associée à une première desdites ouvertures (4) par l'interposition d'un élément d'étanchéité (8) apte à empêcher le passage dudit fluide;
- une deuxième bague d'étanchéité (7) tournée vers ladite première bague d'étanchéité (6) et associée de manière pivotante audit corps de support (2);
- des moyens élastiques (10) comprimés entre ledit corps de support (2) et une desdites bagues d'étanchéité (6, 7) de façon à pousser lesdites bagues d'étanchéité (6, 7) l'une contre l'autre selon ladite direction longitudinale (X) pour les mettre en contact réciproque,
**caractérisé en ce qu'**il comprend une bague d'arrêt (11; 11') interposée entre ladite deuxième bague d'étanchéité (7) et une surface d'appui (12) appartenant à la surface qui délimite ladite cavité passante (3), où la surface d'appui (12) délimite le périmètre de la deuxième desdites ouvertures (5), et où ladite bague d'arrêt (11; 11') est configurée de façon à pouvoir être poussée par lesdits moyens élastiques (10) dans une position d'arrêt contre ladite surface d'appui (12),
ladite bague d'arrêt (11; 11') étant en outre configurée de façon à ce que, dans ladite position d'arrêt, il présente au moins une portion (11 a) dont la saillie selon ladite direction longitudinale (X) est contenue à l'intérieur de ladite deuxième ouverture (5).

2. Joint mécanique (1; 1'; 1") selon la revendication 1), **caractérisé en ce que** lesdits moyens élastiques (10) sont interposés entre ladite deuxième bague d'étanchéité (7) et ladite bague d'arrêt (11 ; 11').

3. Joint mécanique (1; 1'; 1") selon la revendication 2), **caractérisé en ce que** ladite première bague d'étanchéité (6) est associée à une surface annulaire (13) qui délimite de manière périmétrique ladite première ouverture (4).

4. Joint mécanique (1; 1'; 1") selon l'une quelconque des revendications précédentes, **caractérisé en ce que** lesdits moyens élastiques (10) comprennent un ressort hélicoïdal (10a; 10b).

5. Joint mécanique (1) selon la revendication 4), **caractérisé en ce que** ledit ressort hélicoïdal (10a) est conique.

6. Joint mécanique (1; 1'; 1") selon l'une quelconque des revendications précédentes, **caractérisé en ce que** ladite deuxième bague d'étanchéité (7) comprend un joint annulaire (9; 9'; 9"), saillant vers l'intérieur de ladite deuxième bague d'étanchéité (7).

7. Joint mécanique (1; 1'; 1") selon l'une quelconque des revendications précédentes, **caractérisé en ce que** ladite première ouverture (4) appartient à une première portion (14; 14') dudit corps de support (2) et que ladite deuxième ouverture (5) appartient à une deuxième portion (15; 15') dudit corps de support (2), lesdites deux portions (14, 15; 14', 15') étant reliées entre elles par des moyens d'union amovibles (16).

8. Joint mécanique (1; 1'; 1") selon l'une quelconque des revendications précédentes, **caractérisé en ce que** ledit corps de support (2) comprend une bride de raccordement (17) saillant vers l'extérieur en direction incidente sur ladite direction longitudinale (X).

9. Joint mécanique (1; 1'; 1") selon la revendication 8), **caractérisé en ce qu**'il comprend des moyens à vis (18) aptes à relier ladite bride de raccordement (17) à un siège correspondant (19).

10. Joint mécanique (1; 1'; 1") selon l'une quelconque des revendications précédentes, **caractérisé en ce que** ledit corps de support (2) comprend une ou plusieurs ouvertures (20) disposées en positions intermédiaires entre ladite première ouverture (4) et ladite deuxième ouverture (5), aptes à consentir le passage dudit fluide.

11. Joint mécanique (1; 1'; 1") selon l'une quelconque des revendications précédentes, **caractérisé en ce que** ladite deuxième bague d'étanchéité (7) est interposée entre ladite première bague d'étanchéité (6) et la deuxième desdites ouvertures (5).

12. Joint mécanique (1; 1'; 1") selon l'une quelconque des revendications précédentes, **caractérisé en ce que** ledit corps de support (2) est doté de moyens de raccordement aptes à l'associer à un trou (25).

13. Système d'étanchéité (21) pour un fluide, comprenant un joint mécanique (1; 1'; 1") selon l'une quelconque des revendications précédentes, **caractérisé en ce qu**'il comprend un arbre (22) doté de:
- une première portion (23) qui peut être insérée à travers ladite première ouverture (4), ladite deuxième ouverture (5) et lesdites bagues d'étanchéité (6, 7);
- une deuxième portion (24) ayant un diamètre supérieur au diamètre de ladite première portion (23), qui peut être insérée dans ladite deuxième ouverture (5) et configurée de façon à ce qu'elle peut être disposée contre ladite bague d'arrêt (11; 11') afin de la pousser dans le sens contraire à l'action desdits moyens élastiques (10).

14. Système d'étanchéité (21) selon la revendication 13), **caractérisé en ce que** ledit joint mécanique (1; 1'; 1") est réalisé selon la revendication 6), ledit joint annulaire (9; 9'; 9") étant configuré de façon à ce qu'il se met en contact avec ladite première portion (23) dudit arbre (22).
